Europäisches Patentamt

European Patent Office

Office européen des brevets

(19)

(11) **EP 1 317 974 B1**

(12) **EUROPÄISCHE PATENTSCHRIFT**

(45) Veröffentlichungstag und Bekanntmachung des Hinweises auf die Patenterteilung:
**23.07.2003 Patentblatt 2003/30**

(51) Int Cl.7: **B21D 28/02**

(21) Anmeldenummer: **01128464.3**

(22) Anmeldetag: **06.12.2001**

(54) **Verfahren und Maschine zum mehrhubig fortschreitenden Schlitzen von plattenartigen Werkstücken, insbesondere von Blechen**

Method and machine for multiple travel slitting of plate-shaped workpieces, in particular of metal sheets

Procédé et machine pour fendre à plusieurs courses des pièces formés en plaque, en particulier des tôles

(84) Benannte Vertragsstaaten:
**AT CH DE FR GB IT LI**

(43) Veröffentlichungstag der Anmeldung:
**11.06.2003 Patentblatt 2003/24**

(73) Patentinhaber: **TRUMPF Werkzeugmaschinen GmbH + Co. KG**
**71254 Ditzingen (DE)**

(72) Erfinder: **Graf, Daniel**
**71254 Ditzingen (DE)**

(74) Vertreter: **KOHLER SCHMID + PARTNER**
**Patentanwälte**
**Ruppmannstrasse 27**
**70565 Stuttgart (DE)**

(56) Entgegenhaltungen:
**EP-A- 0 639 413      DE-A- 3 739 029**

**Beschreibung**

Die Erfindung betrifft ein Verfahren zum mehrhubig fortschreitenden Schlitzen von plattenartigen Werkstük-ken, insbesondere von Blechen, mittels eines Schlitzwerkzeugs, das zwei einander gegenüberliegenden Seiten des Werkstücks zugeordnete Werkzeugteile umfasst, die jeweils zwei in Schlitzrichtung verlaufende Längsschneiden und an den Längsenden der Längsschneiden zwischen diesen quer zu der Schlitzrichtung verlaufende Querschneiden aufweisen, wobei die Längsschneiden an dem einen Werkzeugteil in Schlitzrichtung gegenüber dem Werkstück ansteigen und wobei im Laufe des Verfahrens die Werkzeugteile relativ zueinander in Werkstückquerrichtung und das Schlitzwerkzeug und das Werkstück relativ zueinander in Vorschubrichtung bewegt werden und die Werkzeugteile bei ihrer Relativbewegung Hübe in Form von Schlitzhüben und wenigstens einem Kapphub ausführen, wobei bei den Schlitzhüben mittels der Werkzeugteile ein Materialstreifen mit in Schlitzrichtung gelegener Verbindung mit dem restlichen Werkstück freigeschnitten und diese Verbindung bei dem Kapphub mittels derselben Werkzeugteile gekappt wird und wobei bei einem Anschnitt-Schlitzhub ein Anschnitt mit Abstand von dem Werkstückrand hergestellt und vor dem Kapphub nach dem Anschnitt-Schlitzhub wenigstens ein nachfolgender Schlitzhub ausgeführt und das Werkstück bei dem Anschnitt-Schlitzhub und dem wenigsten einen nachfolgenden Schlitzhub über eine Schlitzlänge geschlitzt wird, welche die bei dem Kappphub maximal erzielbare Schlitzlänge übersteigt und wobei das Werkstück und das Schlitzwerkzeug zwischen den Hüben der Werkzeugteile mit wenigstens einer Vorschubbewegung relativ zueinander in Vorschubrichtung bewegt werden. Die Erfindung betrifft des Weiteren eine Maschine zum mehrhubig fortschreitenden Schlitzen von plattenartigen Werkstücken, insbesondere von Blechen, mit einem Schlitzwerkzeug und einer Vorschubeinrichtung, mittels derer das Schlitzwerkzeug und das Werkstück in Vorschubrichtung relativ zueinander bewegbar sind und die von einer Vorschubsteuerung gesteuert ist, wobei das Schlitzwerkzeug zwei einander gegenüberliegenden Seiten des Werkstücks zugeordnete Werkzeugteile aufweist, die jeweils mit zwei in Schlitzrichtung verlaufenden Längsschneiden und an den Längsenden der Längsschneiden mit zwischen diesen quer zu der Schlitzrichtung verlaufenden Querschneiden versehen sind, wobei die Längsschneiden an dem einen Werkzeugteil in Schlitzrichtung gegenüber dem Werkstück ansteigen und wobei die Werkzeugteile mittels eines von einer Hubsteuerung gesteuerten Hubantriebes relativ zueinander in Werkstückquerrichtung mit Hüben in Form von Schlitzhüben und wenigstens einem Kapphub bewegbar sind und bei den Schlitzhüben mittels der Werkzeugteile ein Materialstreifen mit in Schlitzrichtung gelegener Verbindung mit dem restlichen Werkstück freigeschnitten und diese Verbindung bei einem Kapphub mittels derselben Werkzeugteile gekappt wird und wobei mittels der Werkzeugteile bei einem Anschnitt-Schlitzhub ein Anschnitt mit Abstand von dem Werkstückrand herstellbar und vor dem Kapphub nach dem Anschnitt-Schlitzhub wenigstens ein nachfolgender Schlitzhub ausführbar und das Werkstück bei dem Anschnitt-Sclitzhub und dem wenigstens einen nachfolgenden Schlitzhub über eine Schlitzlänge schlitzbar ist, welche die bei dem Kapphub maximal erzielbare Schlitzlänge übersteigt und wobei das Werkstück und das Schlitzwerkzeug zwischen den Hüben der Werkzeugteile mittels der Vorschubeinrichtung relativ zueinander in Vorschubrichtung bewegbar sind.

Beim Schlitzen von plattenartigen Werkstücken, insbesondere beim Schlitzen von Blechen, wird in vielen Fällen großer Wert auf von Werkzeugspuren freie Schnittflächen gelegt.

Zur Erzeugung derartiger, qualitativ hochwertiger Schnittflächen dienen derzeit ein gattungsgemäßes Verfahren sowie eine gattungsgemäße Maschine, wie sie aus DE-C-37 39 029 bekannt sind. Im Falle des Standes der Technik werden als Werkzeugteile eines Schlitzwerkzeuges ein an der Oberseite des zu bearbeitenden Werkstückes vorgesehener und in Werkstückquerrichtung bewegbarer Stempel sowie eine mit dem Stempel zusammenwirkende Matrize verwendet, die ihrerseits an der Unterseite des Werkstücks angeordnet und in Werkstückquerrichtung ortsfest ist. Längsschneiden des Stempels steigen gegenüber dem Werkstück in Schlitzrichtung bogenförmig an. Zur Herstellung eines Anschnittes im Innern der Werkstückfläche fährt der Stempel in die Matrize mit einer Hublänge ein, die derart bemessen ist, dass die in Schlitzrichtung hintere Querschneide des Stempels die zugeordnete Querschneide an der Matrize passiert und dadurch die in Schlitzrichtung hintere Querbegrenzung des zu erstellenden Schlitzes freischneidet. Neben dieser Querbegrenzung wird bei dem Anschnitt auch der erste Teil der Schlitz-Längsbegrenzungen erstellt. Die in Schlitzrichtung vordere Querschneide des Stempels verbleibt bei dem Anschnitt aufgrund ihres Höhenversatzes gegenüber der hinteren Querschneide oberhalb des Werkstücks. Infolgedessen wird bei dem Anschnitt ein Materialstreifen freigeschnitten, der mit seinem in Schlitzrichtung vorne liegenden Ende an dem restlichen Werkstück ansetzt. Dieser Materialstreifen wird durch Schlitzhübe, die auf den Anschnitt-Schlitzhub folgen, verlängert. Auch bei den nachfolgenden Schlitzhüben bleibt infolge entsprechender Wahl der Eindringtiefe des Stempels an der Matrize die in Schlitzrichtung gelegene Verbindung des Materialstreifens mit dem restlichen Werkstück erhalten. Aufgrund der Bogenform der Längsschneiden des Stempels wird der freigeschnittene Materialstreifen in das Innere der Matrize abgelenkt. Die zwischen dem Materialstreifen und dem restlichen Werkstück bestehende Verbindung wird beim Freischneiden der in Schlitzrichtung vorderen Querbegrenzung des fertiggestellten Schlitzes gekappt. Zu diesem Zweck taucht der Stempel bei seinem abschließenden Hub derart weit in die Matrize ein, dass seine in Schlitzrichtung vordere Querschneide die zugeordnete Querschneide der Matrize passiert. Ein Abtrennen des Materialstreifens bereits vor dem Endhub, also vor dem den Schlitz fertigstellenden Kapphub, wäre im Falle des Standes der Technik nach DE-C-37 39 029 nur unter Inkaufnahme einer verminderten Qualität der erstellten Schnittflächen möglich. Nach dem betreffenden Kapphub müsste von den Werkzeugteilen nämlich zur Schlitzverlängerung ein Hub ausgeführt werden, der von einer Schlitz-Querbegrenzung ohne seitlichen Freischnitt auszugehen hätte. In derartigen Fällen aber ergeben sich erfahrungsgemäß auf Höhe des Hubansatzes unerwünschte Werkzeugmarken an den Schlitzlängsbegrenzungen. Dementsprechend lassen sich mit dem vorbekannten Verfahren sowie der vorbekannten Maschine qualitativ hochwertige Schnittflächen nur unter der Voraussetzung erzeugen, dass lediglich ein einziger Kapphub und dieser als Endhub ausgeführt wird. Ein Kappen des freigeschnittenen Materialstreifens erst mit dem Endhub kann aber die Funktionssicherheit des Schlitzverfahrens sowie der Schlitzvorrichtung beeinträchtigen. So ergeben sich beim mehrhubig fortschreitenden Schlitzen Materialstreifenlängen, aufgrund derer es schwierig ist, die freigeschnittenen Materialstreifen an dem Schlitzwerkzeug derart unterzubringen, dass sie den weiteren Schlitzvorgang nicht behindern.

Ein gattungsfremdes Verfahren sowie eine gattungsfremde Vorrichtung sind offenbart in US-A-5,400,682. Im Falle dieses Standes der Technik sind als Werkzeugteile eines Schlitzwerkzeuges eine Matrize sowie zwei mit der Matrize zusammenwirkende Stempel vorgesehen. Mittels des einen der beiden Stempel werden an dem betreffenden Werkstück Schlitzhübe ausgeführt und dabei Materialstreifen mit in Schlitzrichtung liegender Verbindung mit dem restlichen Werkstück freigeschnitten. Der zweite Stempel dient ausschließlich dazu, die Verbindung der Materialstreifen mit dem restlichen Werkstück zu kappen. Im Falle einer der aus US-A-5,400,682 bekannten Verfahrensvarianten und Maschinenbauarten wird der Materialstreifen mit Abstand von seinem Ansatz an dem restlichen Werkstück gekappt. Werkzeugspuren an den in Schlitzlängsrichtung verlaufenden Schnittflächen des erstellten Schlitzes werden dadurch zwar vermieden; jedoch bedarf es hierzu eines konstruktiv und steuerungstechnisch aufwändigen Schlitzwerkzeuges, nämlich eines Schlitzwerkzeuges mit zwei separaten, unabhängig voneinander zu betätigenden Stempeln. Nach dem Anschnitt-Schlitzhub wird der Stempel, der diesen Schlitzhub ausgeführt hat, in eine Position oberhalb des zu bearbeitenden Werkstücks bewegt. In dieser Position verbleibt der genannte Stempel sowohl während der auf den Anschnitt-Schlitzhub folgenden Rückschubbewegung des Werkstückes als auch während des sich daran anschließenden Kapphubes. Die Bemessung der Rückschublänge ist daher von dem die Schlitzhübe ausführenden Stempel der vorbekannten Maschine unabhängig.

Ziel der Erfindung ist es, den Stand der Technik nach DE-C-37 39 029 dahingehend weiterzubilden, dass sich die Funktionssicherheit des vorbekannten Verfahrens sowie der vorbekannten Maschine unter Gewährleistung qualitativ hochwertiger Schnittflächen erhöht.

Verfahrensbezogen wird diese Aufgabe erfindungsgemäß durch die Merkmalskombination von Patentanspruch 1, vorrichtungsbezogen durch die Merkmalskombination von Patentanspruch 6 gelöst.

Die demnach von Schlitzwerkzeug und Werkstück vor dem Kapphub relativ zueinander ausgeführte Rückschubbewegung bewirkt, dass der bei dem vorausgegangenen Anschnitt-Schlitzhub sowie dem wenigstens einen nachfolgenden Schlitzhub freigeschnittene Materialstreifen beim Kapphub mit Abstand von seinem Ansatz an dem restlichen Werkstück abgetrennt wird. Bei einem nach dem Kappphub zur Schlitzverlängerung erforderlichen Hub kann das Schlitzwerkzeug folglich an einem in Schlitzrichtung beidseits freigeschnittenen Materialstreifenabschnitt ansetzen. Die Qualität der erstellten Schnittflächen beeinträchtigende Werkzeugmarken im Bereich des Ansatzes des Werkzeuges werden dadurch vermieden. Nachdem im Falle erfindungsgemäßer Verfahren und erfindungsgemäßer Vorrichtungen Schlitz- und Kapphübe mittels ein und derselben Werkzeugteile ausgeführt werden und die erstellten Schlitze im Werkstückinnern ihren Ausgang nehmen, ist ein besonderes Augenmerk auf die Anschnittphase zu richten. Bei dem Anschnitt-Schlitzhub sowie dem wenigstens einen nachfolgenden Schlitzhub wird ein Materialstreifen freigeschnitten, der in Schlitzrichtung mit dem restlichen Werkstück verbunden ist. Diese Verbindung wird bei dem im Anschluss an den Anschnitt-Schlitzhub sowie den wenigstens einen nachfolgenden Schlitzhub ausgeführten Kapphub getrennt. Bei diesem Kapphub passieren sowohl die vorderen als auch die hinteren Querschneiden der Werkzeugteile einander im Werkstückquerrichtung. Dabei ist eine unerwünschte rückwärtige Verlängerung des angeschnittenen Schlitzes zu vermeiden. Es muss dementsprechend sichergestellt sind, dass die Werkzeugteile bei dem Kapphub einander mit ihren hinteren Querschneiden in dem zuvor freigeschnittenen Bereich des Schlitzes passieren. Dies wird erfindungsgemäß durch die in den unabhängigen Patentansprüchen beschriebene Abstimmung der Rückschublänge auf die Schlitzlänge des zuvor in Schlitzrichtung hinter den hinteren Querschneiden freigeschnittenen Abschnittes des zu erstellenden Schlitzes gewährleistet. In dem durch diese Bedingung vorgegebenen Rahmen können die bei dem Anschnitt-Schlitzhub und dem wenigstens einen nachfolgenden Schlitzhub freigeschnittene Schlitzlänge sowie die Rückschublänge der Rückschubbewegung vor dem Kapphub bedarfsabhängig gewählt werden. In jedem Fall lässt sich der erste Kapphub noch vor dem Endhub, mit welchem der Schlitz fertiggestellt wird, ausführen. Dies wiederum erlaubt es, die Länge des freigeschnittenen Materialstreifens von Anfang an zu begrenzen. Materialstreifenlängen, die zu einer Behinderung des Schlitzvorganges führen könnten, werden vermieden. Die Art der von den Werkzeugteilen nach dem ersten Kapphub zur Schlitzverlängerung bzw. -vervollständigung auszuführenden Hübe ist von dem betreffenden Bearbeitungsfall abhängig. Etwa bei der Erstellung von Schlitzen, die von dem Werkstückinnern ausgehend in den Werkstückrand münden, ist es denkbar, dass auf den in der Anschnittphase ausgeführten Kapphub lediglich noch ein oder mehrere Schlitzhübe folgen. Insbesondere auch der Endhub kann in diesem Fall als Schlitzhub ausge-

EP 1 317 974 B1

führt werden.

Besondere Ausführungsarten des erfindungsgemäßen Verfahrens sind in den abhängigen Patentansprüchen 2 bis 5, besondere Ausführungsarten der erfindungsgemäßen Maschine in den abhängigen Patentansprüchen 7 bis 13 beschrieben.

Im Falle der Erfindungsvarianten nach den Patentansprüchen 2 und 7 entspricht die Vorschublänge wenigstens einer Vorschubbewegung vor dem Kapphub der Rückschublänge der nachfolgenden, ebenfalls noch vor dem Kapphub ausgeführten Rückschubbewegung. Infolge der betragsmäßigen Übereinstimmung der genannten Bewegungen ergeben sich steuerungstechnische Vorteile.

Die Größe der Rückschublänge der Rückschubbewegung vor dem bzw. vor einem Kapphub ist sowohl während der Anschnittphase als auch gegebenenfalls in darauffolgenden Bearbeitungsphasen von besonderer Bedeutung für die Optimierung des Schlitzvorganges. Zum einen ist die Rückschublänge hinreichend groß zu bemessen, damit der Materialstreifen bei dem auf die Rückschubbewegung folgenden Kapphub abgetrennt werden kann, ohne dass die Werkzeugteile unerwünschte Markierungen an den Schlitz-Längsbegrenzungen hinterlassen. Zum anderen darf die Rückschublänge aber auch nicht zu groß sein. Bei übergroßer Rückschublänge wäre zwar gewährleistet, dass die Werkzeugteile den Materialstreifen bei dem auf die Rückschubbewegung folgenden Kapphub mit hinreichend großem Abstand von dessen Verbindung mit dem restlichen Werkstück abtrennen; bei einem unmittelbar nachfolgenden Schlitzhub würde aber nicht die an sich maximal mögliche Schlitzlänge freigeschnitten. Hierdurch wiederum würde sich der Zeitbedarf für die Erstellung des Schlitzes unangemessen vergrößern; die tatsächlich erzielte Schlitzgeschwindigkeit bliebe hinter der an sich möglichen Maximalgeschwindigkeit zurück. Vor diesem Hintergrund sind die abhängigen Verfahrensansprüche 3 bis 5 sowie die abhängigen Vorrichtungsansprüche 8 bis 10 zu sehen, die allesamt auf eine sachgerechte Bemessung der Rückschublänge der vor dem Kapphub ausgeführten Rückschubbewegung abzielen. Die zu diesem Zweck herangezogenen Parameter sind für jeden Bearbeitungsvorgang wohl definiert und daher als Grundlage für die Maschinensteuerung bestens geeignet. Das Vorhandensein eines Neigungswinkels, wie er in den Patentansprüchen 4 und 5 bzw. 9 und 10 genannt ist, setzt nicht notwendigerweise einen geradlinigen Verlauf der Längsschneiden an dem betreffenden Werkzeugteil voraus. Etwa im Fall bogenförmiger Längsschneiden kann der Neigungswinkel gegenüber dem Werkstück auch näherungsweise bestimmt werden.

Die Patentansprüche 11, 12 und 13 betreffen aus konstruktiven Gründen bevorzugte Bauarten der erfindungsgemäßen Maschine.

Gemäß Patentanspruch 11 werden zweckmäßigerweise Werkstückvorschub und Werkstückrückschub jeweils von ein und derselben Einrichtung ausgeführt und gesteuert.

Die Erfindungsbauart nach Patentanspruch 12 ist konstruktiv auf die erfindungsgemäßen Besonderheiten bei der Erstellung des Schlitz-Anschnittes abgestimmt. So wird im Rahmen des erfindungsgemäßen Verfahrens sowie mittels der erfindungsgemäßen Maschine in der Anschnittphase zunächst ein Materialstreifen freigeschnitten, dessen Länge den zwischen den Querschneiden der Werkzeugteile in Schlitzrichtung bestehenden Abstand übersteigt, der aber dessen ungeachtet an dem Schlitzwerkzeug derart unterzubringen ist, dass er den Schlitzvorgang nicht behindert. Zu einer derartigen Unterbringung des freigeschnittenen Materialstreifens dient der ausweislich Patentanspruch 12 an einem der Werkzeugteile vorgesehene Durchtritt für den Materialstreifen. Der "überlange" Materialstreifen kann mit seinem in Vorschubrichtung gelegenen freien Ende in diesen Durchtritt eintauchen und ist dann von dem Nahbereich der Schneiden der Werkzeugteile hinreichend weit entfernt.

Gemäß Patentanspruch 13 ist der mit dem Durchtritt für den freigeschnittenen Materialstreifen versehene Werkzeugteil gegenüber einer maschinenseitigen Werkzeugteilhalterung derart angeordnet, dass der Durchtritt für den Materialstreifen an der Wand des Werkzeugteils von der Werkzeugteilhalterung freigegeben ist. Infolge dieser Anordnung des Werkzeugteils bedarf es an der Werkzeugteilhalterung keiner besonderen konstruktiven Maßnahmen zur Anpassung der Werkzeugteilhalterung an die Besonderheiten des erfindungsgemäßen Schlitzverfahrens.

Nachfolgend wird die Erfindung anhand beispielhafter schematischer Darstellungen näher erläutert. Es zeigen:

Fig. 1          eine Maschine zum Schlitzen von Blechen mit ein und auswechselbaren Schlitzwerkzeugen,

Fig. 2          ein Schlitzwerkzeug erster Bauart für die Maschine nach Fig. 1, umfassend ein Ober- sowie ein Unterwerkzeug,

Fign. 3 und 4      das Unterwerkzeug nach Fig. 2 beim Einwechseln an der Maschine nach Fig. 1,

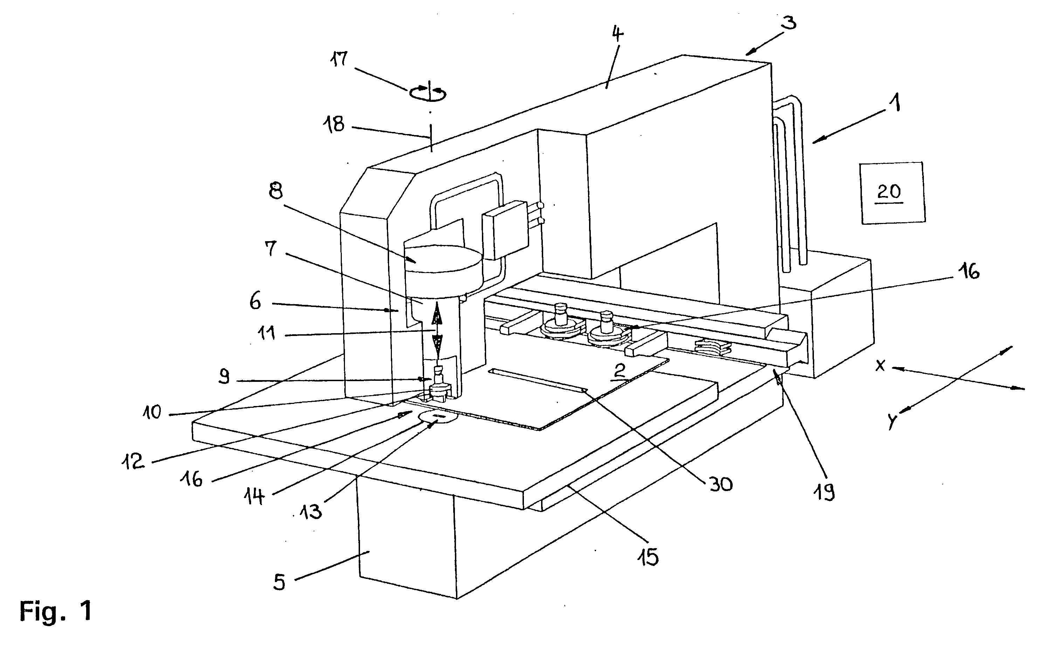

Fign. 5/1 bis 5/6   Prinzipdarstellungen zum Ablauf einer Anschnittphase bei Betrieb der Maschine nach Fig. 1,

Fign. 6/1 bis 6/5   Prinzipdarstellungen zum Ablauf einer Arbeitsphase bei Betrieb der Maschine nach Fig. 1,

Fign. 7/1 bis 7/3     Prinzipdarstellungen zum Ablauf einer Endphase bei Betrieb der Maschine nach Fig.1,

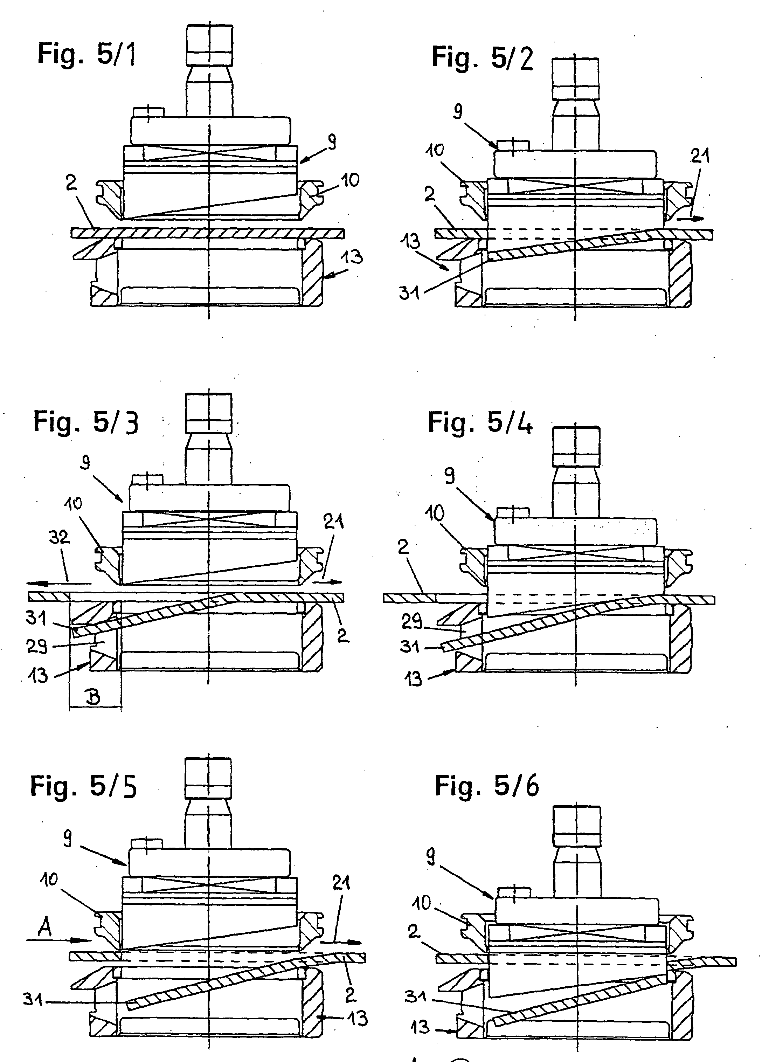

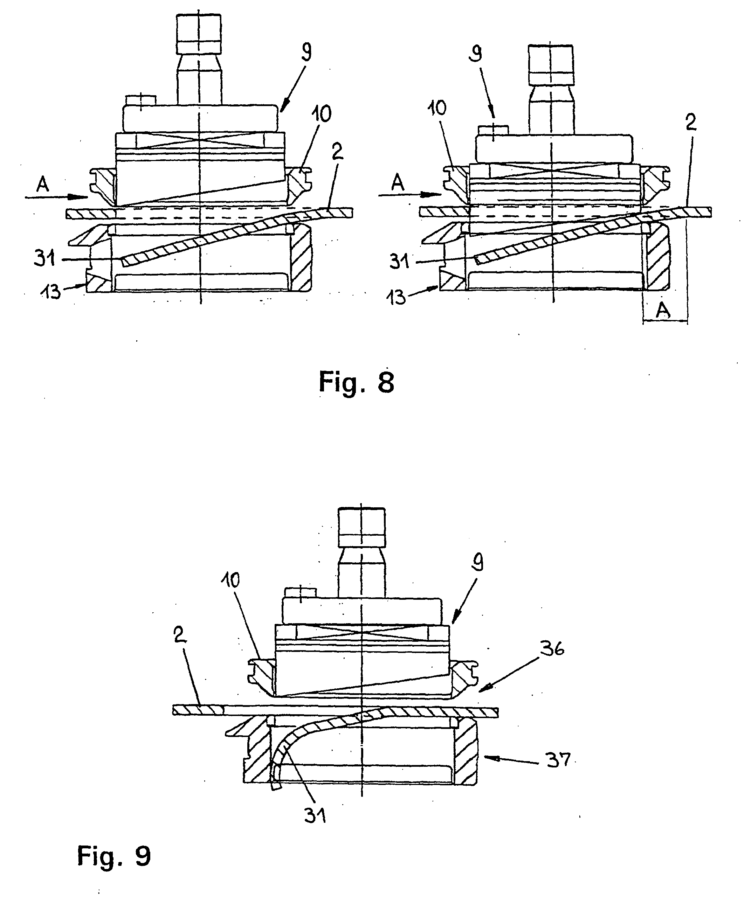

Fig. 8     eine Gegenüberstellung der Anordnung nach Fig. 5/5 sowie einer entsprechenden Anordnung mit gegenüber Fig. 5/5 verminderter Hubhöhe des Oberwerkzeugs und

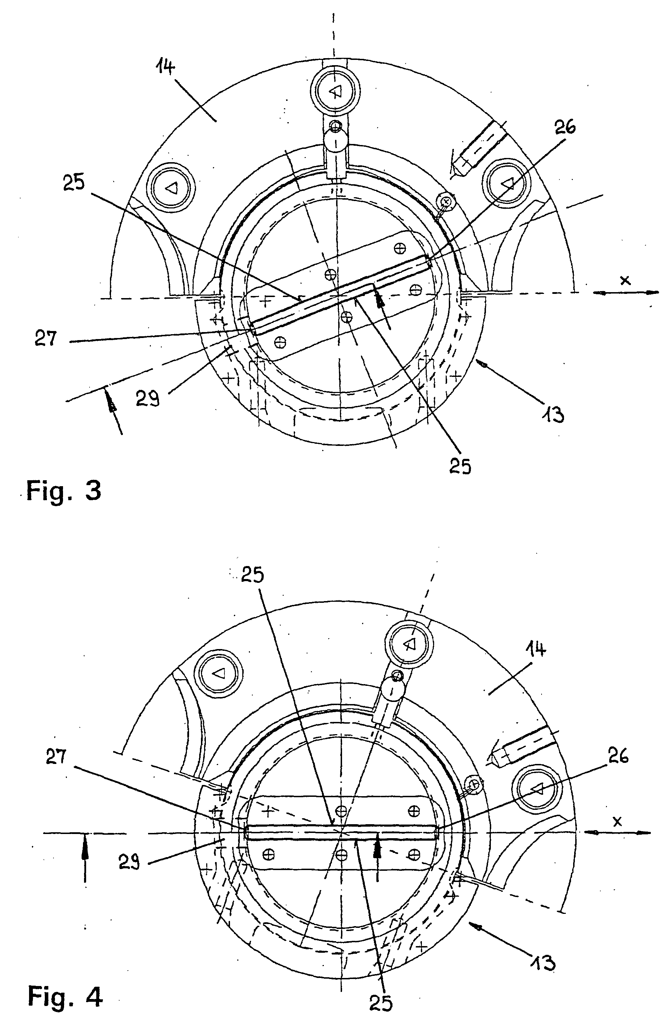

Fig. 9     ein Schlitzwerkzeug zweiter Bauart für die Maschine nach Fig. 1 in dem Betriebszustand gemäß Fig. 5/3.

Ausweislich Fig. 1 besitzt eine Maschine 1 zum Schlitzen von Blechen, vorliegend eines Bleches 2, ein im Wesentlichen C-förmiges Maschinengestell 3. Letzteres weist einen oberen Gestellschenkel 4 sowie einen unteren Gestellschenkel 5 auf. An dem freien Ende des oberen Gestellschenkels 4 befindet sich eine Bearbeitungsstation 6 mit einem Stößel 7. Der Stößel 7 ist Teil eines Hubantriebes 8, mittels dessen ein Oberwerkezug mit Werkzeugteilen in Form eines Stempels 9 sowie eines Abstreifers 10 in einer durch einen Doppelpfeil veranschaulichten Hubrichtung 11 hydraulisch angehoben und abgesenkt werden können. Der Stempel 9 und der Abstreifer 10 sind dabei in einer Werkzeugteilhalterung 12 des Stößels 7 ein- und auswechselbar fixiert. Gemeinsam mit einer Matrize 13, die als Unterwerkzeug in einer Werkzeugteilhalterung 14 eines Werkstücktischs 15 an dem unteren Gestellschenkel 5 ein- und auswechselbar angebracht ist, bilden der Stempel 9 und der Abstreifer 10 ein Schlitzwerkzeug 16. Die Werkzeugteilhalterung 12 an dem Stößel 7 und die Werkzeugteilhalterung 14 an dem Werkstücktisch 15 sind synchron und in Richtung eines Doppelpfeils 17 um eine in Hubrichtung 11 verlaufende Werkzeugdrehachse 18 drehbar.

Neben dem Werkstücktisch 15 ist an dem unteren Gestellschenkel 5 als Vorschubeinrichtung eine Koordinatenführung 19 üblicher Bauart vorgesehen. Mittels der Koordinatenführung 19 werden die zu bearbeitenden Werkstükke, im dargestellten Beispielsfall das Blech 2, auf bekannte Art und Weise in einer durch Koordinatenachsen x, y definierten Horizontalebene relativ zu der Bearbeitungsstation 6 bewegt. Darüber hinaus wird die Koordinatenführung 19 in ebenfalls bekannter Weise zum Vorhalten sowie zum Ein- und Auswechseln von Schlitzwerkzeugen 16 an der Bearbeitungsstation 6 genutzt. Eine Rechnersteuerung 20 dient zur Steuerung sämtlicher Funktionen der Maschine 1. Insbesondere sind in die Rechnersteuerung 20 eine Hubsteuerung für den Hubantrieb 8 sowie eine gleichzeitig als Rückschubsteuerung dienende Vorschubsteuerung für die Koordinatenführung 19 integriert.

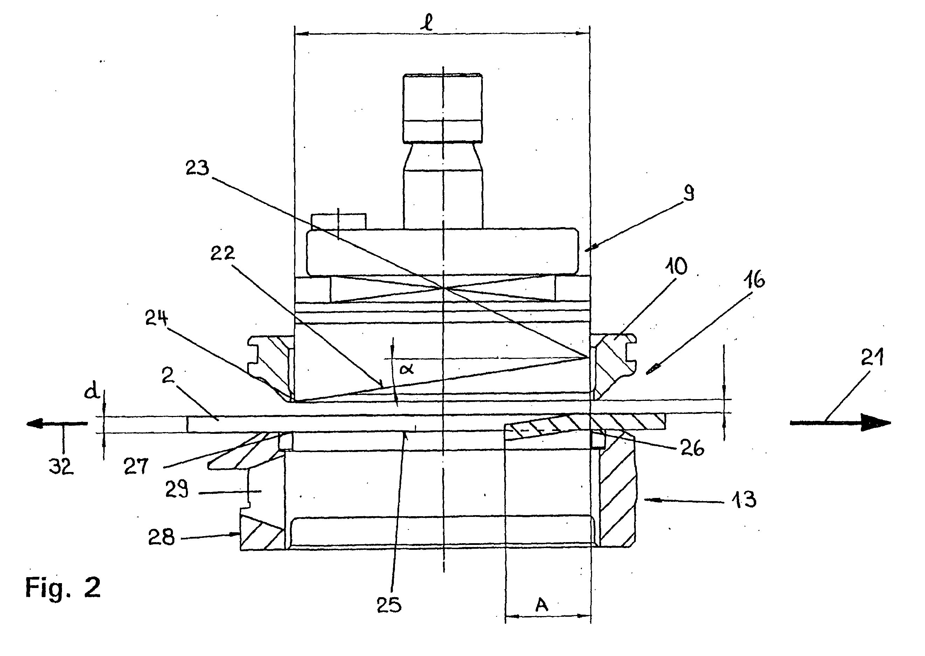

Das Schlitzwerkzeug 16 ist im Einzelnen in Fig. 2 dargestellt. Der Stempel 9 des Schlitzwerkzeugs 16 ist ebenso wie der ihm zugeordnete Abstreifer 10 herkömmlicher Bauart. Wie üblich besitzt der Stempel 9 zwei in einer Schlitzrichtung 21 verlaufende Längsschneiden 22, die in Schlitzrichtung 21 gegenüber dem zu schlitzenden Blech 2 ansteigen. Zwischen den Längsschneiden 22 des Stempels 9 erstrecken sich quer zu der Schlitzrichtung 21 eine in dieser Richtung vordere Querschneide 23 sowie eine hintere Querschneide 24. Entgegen der Schlitzrichtung 21 ist eine Vorschubrichtung 32 gerichtet.

Die Matrize 13 ist gleichfalls mit in Schlitzrichtung 21 verlaufenden Längsschneiden, nämlich Längsschneiden 25, versehen. Zwischen diesen erstrecken sich quer zu der Schlitzrichtung 21 eine vordere Querschneide 26 sowie eine hintere Querschneide 27. Eine Wand 28 der Matrize 13 ist in ihrem in Vorschubrichtung 32 gelegenen Teil mit einem Durchtritt 29 versehen.

Die mit dem Schlitzwerkzeug 16 maximal erzielbare Schlitzlänge entspricht im Wesentlichen den annähernd miteinander übereinstimmenden Längen der Längsschneiden 22, 25 an dem Stempel 9 sowie der Matrize 13 und ist in Fig. 2 mit "l" bezeichnet. Für die Dicke des Blechs 2 ist in Fig. 2 das Kürzel "d", für den Neigungswinkel der Längsschneiden 22 an dem Stempel 9 gegenüber dem Blech 2 das Kürzel "$\alpha$" vorgesehen.

In Fig. 1 ist die Maschine 1 nach dem Fertigstellen eines Schlitzes 30 in dem Blech 2 gezeigt. Die einem derartigen Betriebszustand vorausgehenden Abläufe ergeben sich aus den Fign. 3 bis 7.

Vor Beginn des eigentlichen Bearbeitungsvorganges ist zunächst an der Bearbeitungsstation 6 das benötigte Schlitzwerkzeug 16 einzuwechseln. Zu diesem Zweck wird das betreffende, in einer Werkzeugkassette an der Koordinatenführung 19 vorgehaltene Schlitzwerkzeug 16 durch gesteuertes Verfahren der Koordinatenführung 19 zu der Bearbeitungsstation 6 verbracht. Dort werden der Stempel 9 und der Abstreifer 10 in die Werkzeugteilhalterung 12, die Matrize 13 in die Werkzeugteilhalterung 14 eingesetzt. Sowohl der Stempel 9 und der Abstreifer 10 als auch die Matrize 13 sind nach dem Einsetzen in die betreffende Werkzeugteilhalterung 12, 14 unter einem Winkel von etwa 20° gegen die x-Koordinatenachse gedreht. Für die Matrize 13 sind diese Verhältnisse in Fig. 3 dargestellt.

Von der Rechnersteuerung 20 gesteuert werden anschließend der Stößel 7 mit dem Stempel 9 und dem Abstreifer 10 sowie die Werkzeugteilhalterung 14 mit der Matrize 13 in Fig. 3 im Uhrzeigersinn so weit gedreht, bis sämtliche Werkzeugteile mit ihren maßgebenden Achsen in Richtung der x-Koordinatenachse verlaufen. Der dann vorliegende Betriebszustand ist für die Matrize 13 aus Fig. 4 ersichtlich. Mit dieser Ausrichtung des Stempels 9 und des Abstreifers 10 sowie der Matrize 13 wird dann das Blech 2 bearbeitet. Wie aus Fig. 4 ersichtlich, ist dabei der Durchtritt 29 in der Wand 28 der Matrize 13 von der Werkzeugteilhalterung 14 freigegeben.

Nach dem Einwechseln und Ausrichten des Schlitzwerkzeugs 16 wird das Blech 2 mittels der Koordinatenführung 19 gegenüber dem Schlitzwerkzeug 16 positioniert und dabei in den Zwischenraum zwischen dem Stempel 9 und dem Abstreifer 10 einerseits und der Matrize 13 andererseits eingeschoben (Fig. 5/1). Der Stempel 9 befindet sich dabei in Hubrichtung 11 in seiner Ausgangslage. Anschließend wird mit einem Anschnitt-Schlitzhub in dem Blech 2 ein Anschnitt erstellt (Fig. 5/2). Dabei werden durch Zusammenwirken der hinteren Querschneide 24 an dem Stempel 9 und der hinteren Querschneide 27 an der Matrize 13 die in Schlitzrichtung 21 hintere Querbegrenzung sowie der erste Teil der in Schlitzrichtung 21 verlaufenden Längsbegrenzungen des Schlitzes 30 erstellt. Freigeschnitten wird ein Materialstreifen 31. Aufgrund entsprechender Steuerung des Hubantriebes 8 fährt der Stempel 9 bei dem Anschnitt-Schlitzhub nur so weit in die Matrize 13 ein, dass an der in Schlitzrichtung 21 gelegenen Seite eine Verbindung zwischen dem Materialstreifen 31 und dem restlichen Blech 2 erhalten bleibt.

Nach dem Anschnitt-Schlitzhub wird der Stempel 9 in seine Ausgangsposition angehoben und das Blech 2 mittels der Koordinatenführung 19 gesteuert entgegen der Schlitzrichtung 21 in Vorschubrichtung 32 um eine Vorschublänge B verschoben. Es ergeben sich so die Verhältnisse gemäß Fig. 5/3. Der mit dem restlichen Blech 2 vorgeschobene Materialstreifen 31 läuft bei der Vorschubbewegung des Blechs 2 in den Durchtritt 29 an der Wand 28 der Matrize 13 ein. Da der Durchtritt 29 außerhalb der Werkzeugteilhalterung 14 liegt, kann der Materialstreifen 31 den Durchtritt 29 ungehindert durchsetzen.

Nach dem beschriebenen Vorschub des Bleches 2 wird unter erneutem Absenken des Stempels 2 ein weiterer Schlitzhub ausgeführt und dabei der zuvor freigeschnittene Abschnitt des Schlitzes 30 in Schlitzrichtung 21 verlängert (Fig. 5/4). Für den Stempel 9 wird bei diesem zweiten Schlitzhub dieselbe Hubweglänge wie bei dem anfänglichen Anschnitt-Schlitzhub gewählt.

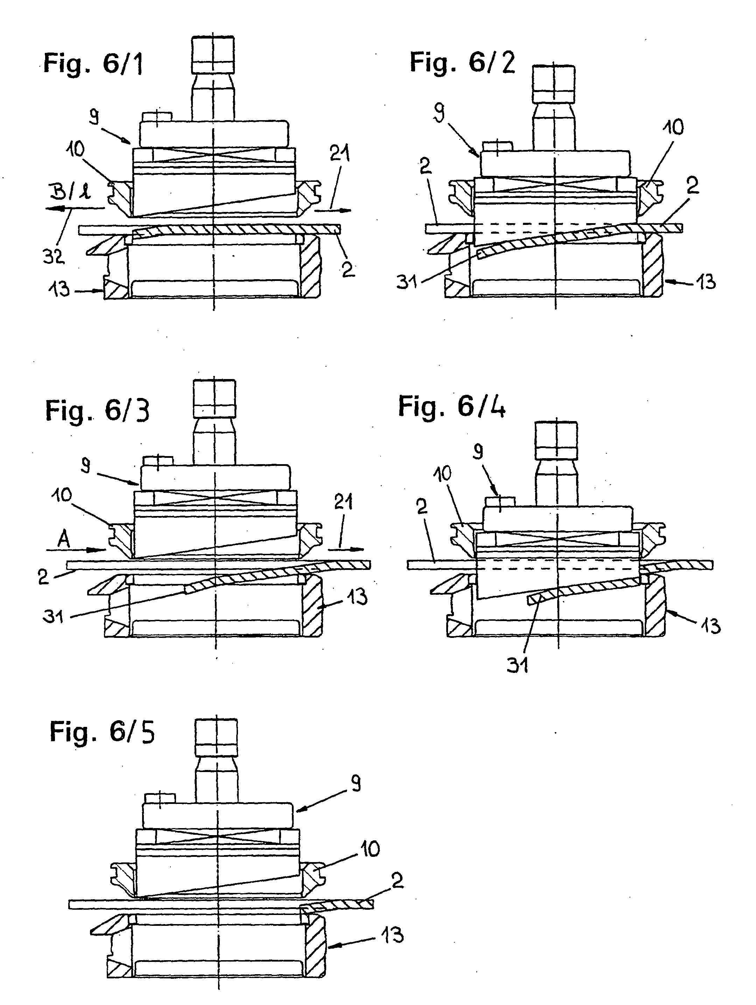

Im Anschluss an den zweiten Schlitzhub wird der Stempel 9 erneut in die Ausgangsposition angehoben. Danach wird das Blech 2 in Schlitzrichtung 21 und damit entgegen der Vorschubrichtung 32 über eine Rückschublänge A zurückverschoben. Als Rückschubeinrichtung dient dabei ebenfalls die Koordinatenführung 19. Deren Vorschubsteuerung übernimmt gleichzeitig die Funktion einer Rückschubsteuerung. Die Rückschublänge A entspricht dabei der Vorschublänge B der vorausgegangenen Vorschubbewegung. Nach Beendigung der Rückschubbewegung des Bleches 2 liegt der Materialstreifen 31 mit Abstand von seinem Ansatz an dem restlichen Blech 2 auf der vorderen Querschneide 26 der Matrize 13 auf (Fig. 5/5). Es folgt dann der erste Kapphub, bei welchem der Materialstreifen 31 unter Zusammenwirken der vorderen Querschneide 23 des Stempels 9 und der vorderen Querschneide 26 der Matrize 13 gekappt wird (Fig. 5/6). Bei diesem Kapphub wird der Stempel 9 mittels des Hubantriebes 8 mit einem größeren Hubweg in die Matrize 13 eingefahren als bei den beiden vorausgegangenen Schlitzhüben.

Bei dem Anschnitt-Schlitzhub sowie dem nachfolgenden Schlitzhub wird der Schlitz 30 über eine Länge freigeschnitten, die größer ist als die mit dem Schlitzwerkzeug 16 bei einem Kapphub maximal erzielbare Schlitzlänge 1. Die Rückschublänge A entspricht im gezeigten Beispielsfall demjenigen Abstand, der zwischen der hinteren Querbegrenzung des angeschnittenen Schlitzes 30 und den hinteren Querschneiden 24, 27 von Stempel 9 und Matrize 13 nach dem auf den Anschnitt-Schlitzhub folgenden Schlitzhub besteht. Infolgedessen kommt das Blech 2 nach seiner Rückschubbewegung (Fig. 5/5) mit der hinteren Querbegrenzung des Schlitzes 30 auf Höhe der hinteren Querschneiden 24, 27 des Stempels 9 und der Matrize 13 zu liegen. Bei dem anschließenden Kapphub bleibt folglich die hintere Querbegrenzung des Schlitzes 30 erhalten; eine unerwünschte rückwärtige Verlängerung des Schlitzes 30 wird vermieden.

Größenmäßig wird die Rückschublänge A und damit vorliegend auch die Vorschublänge B während der Anschnittphase in Abhängigkeit von der Dicke d des Blechs 2 und dem Neigungswinkel $\alpha$ der stempelseitigen Längsschneiden 22 gegenüber dem Blech 2 bestimmt zu

$$A = \frac{2/3\ d}{\tan \alpha}.$$

Bei dem so erhaltenen Wert für die Rückschublänge A ist gewährleistet, dass der nach der Rückschubbewegung des Blechs 2 ausgeführte Kapphub an dem zuvor freigeschnittenen Materialstreifen 31 mit hinreichendem Abstand von dessen Verbindung mit dem Blech 2 ansetzt und dass dementsprechend die in Schlitzrichtung 21 vordere Querbegrenzung des Schlitzes 30 nach dem Kapphub von einem seitlich freigeschnittenen Materialstreifenabschnitt gebildet wird. Gleichzeitig ist gewährleistet, dass der in Schlitzrichtung 21 stehengebliebene Materialstreifenabschnitt nur eine sehr geringe Länge aufweist und dass dementsprechend ein auf den Kapphub der Anschnittphase folgender Werkzeughub nur geringfügig mit der bereits freigeschnittenen Schlitzlänge überlappt.

Im Anschluss an den Betriebszustand gemäß Fig. 5/6 wird der Stempel 9 in seine Ausgangslage bewegt. Damit ist die Anschnittphase beendet. Es schließt sich dann die Arbeitsphase gemäß den Fign. 6/1 bis 6/5 an.

In der Arbeitsphase wird zunächst das Blech 2 mittels der Koordinatenführung 19 in Vorschubrichtung 32 um eine Vorschublänge B, die nun der maximal erzielbaren Schlitzlänge 1 entspricht, in die Position gemäß Fig. 6/1 verschoben. Im Anschluss an einen Schlitzhub (Fig. 6/2) mit anschließendem Rückhub des Stempels 9 wird das Blech 2 über die Rückschublänge A in Rückschubrichtung, d.h. in Schlitzrichtung 21, zurückverschoben (Fig. 6/3). In diesem Zusammenhang ist von Bedeutung, dass die Rückschublänge A so gewählt ist, dass der freigeschnittene Materialstreifen 31 nach der Rückschubbewegung im Bereich der vorderen Querschneiden 23, 26 des Stempels 9 und der Matrize 13 zu liegen kommt. Im gezeigten Beispielsfall stimmt die Rückschublänge A der Arbeitsphase mit der Rückschublänge A der Anschnittphase überein. Die Vorschublänge B der Arbeitsphase hingegen übersteigt die Vorschublänge B der Anschnittphase. Dadurch wird vermieden, dass in der Anschnittphase ein Materialstreifen 31 mit zu großer, zu einer Behinderung des Schlitzvorganges führenden Länge freigeschnitten wird; gleichzeitig kann in der Arbeitsphase je Werkzeughub ein verhältnismäßig großer Schlitzfortschritt erzielt werden.

Auf den Betriebszustand gemäß Fig. 6/3 folgt ein Kapphub (Fig. 6/4), nach dessen Beendigung der Stempel 9 wieder in seine Ausgangsposition zurückbewegt wird (Fig. 6/5). Die von dem Stempel 9 während der Arbeitsphase ausgeführten Hübe stimmen betragsmäßig mit den Hüben in der Anschnittphase überein. Abweichend von der Anschnittphase wird in der Arbeitsphase nach jedem Schlitzein Kapphub ausgeführt. Die Arbeitssequenz gemäß den Fign. 6/1 bis 6/5 wird so oft wiederholt, bis der Schlitz 30 seine in Schlitzrichtung 21 vorne liegenden Querbegrenzung nahezu erreicht hat. Mit dem letzten Kapphub der Arbeitsphase wird der Materialstreifen 31 wie gewohnt mit Abstand von dessen Verbindung mit dem restlichen Blech 2 gekappt. Es folgt dann die in den Fign. 7/1 bis 7/3 veranschaulichte Endphase der Blechbearbeitung.

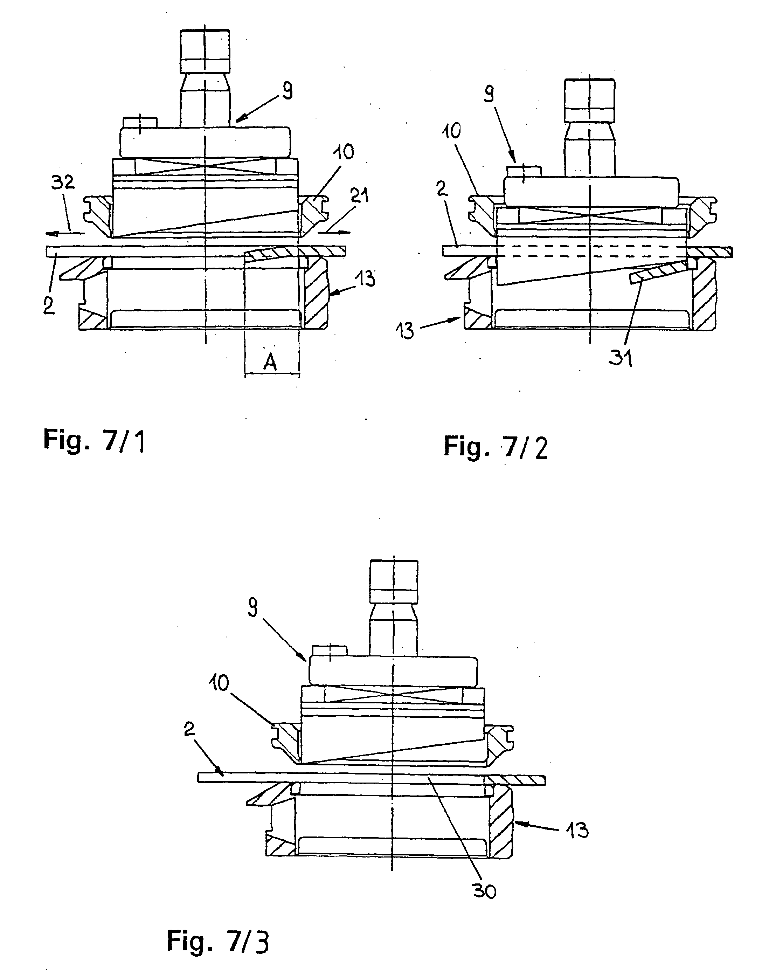

Ausgehend von dem Betriebszustand gemäß Fig. 6/5 wird das Blech 2 mittels der Koordinatenführung 19 in Vorschubrichtung 32 so weit verschoben, dass es mit dem Bereich der in Schlitzrichtung 21 gelegenen vorderen Begrenzung des Schlitzes 30 auf Höhe der einander mit Abstand gegenüberliegenden vorderen Querschneiden 23, 26 des Stempels 9 und der Matrize 13 angeordnet ist (Fig. 7/1). Anschließend wird als Endhub ein Kapphub durchgeführt (Fig. 7/2). Mit diesem Kapphub wird der letzte Teil des Schlitzes 30 einschließlich der vorderen Querbegrenzung des Schlitzes 30 erstellt. Ausschließlich bei diesem letzten Kapphub wird ein Materialstreifen 31 aus dem vollen Material, also jenseits der Verbindung mit dem restlichen Blech 2, freigeschnitten. An dem Schlitz 30 ergeben sich so qualitativ hochwertige und von Werkzeugspuren freie Schnittflächen.

Nach einem abschließenden Rückhub des Stempels 9 (Fig. 7/3) kann das Blech 2 mittels der Koordinatenführung 19 in die Position gemäß Fig. 1 verfahren werden.

Fig. 8 zeigt in ihrer linken Teildarstellung die Verhältnisse gemäß Fig. 5/5. Bei in Ausgangsstellung befindlichem Stempel 9 wird dabei das Blech 2 in Rückschubrichtung verschoben. Ausweislich der rechten Teildarstellung von Fig. 8 kann der Rückschub des Blechs 2 aber auch bei gegenüber Fig. 5/5 abgesenktem Stempel ausgeführt werden. Es bedarf dann im Anschluss an den vorausgegangenen Schlitzhub nur eines verhältnismäßig geringen Rückhubes des Stempels 9.

In Fig. 9 ist ein Schlitzwerkzeug 36 gezeigt, das neben einem Stempel 9 und einem Abstreifer 10 der Bauart gemäß den Fign. 1 bis 8 eine Matrize 37 umfasst, die konstruktiv von der zuvor beschriebenen Matrize 13 abweicht. So weist die Matrize 37 keinen Durchtritt für den Materialstreifen 31 auf. Folglich ist der Materialstreifen 31 in einem Betriebszustand entsprechend Fig. 5/3 gekrümmt und nach unten in die Matrize 13 abgelenkt. Im Übrigen stimmen die Abläufe bei Einsatz des Schlitzwerkzeuges 36 mit den Abläufen bei Verwendung des Schlitzwerkzeugs 16 überein.

## Patentansprüche

1. Verfahren zum mehrhubig fortschreitenden Schlitzen von plattenartigen Werkstücken, insbesondere von Blechen (2), mittels eines Schlitzwerkzeugs (16, 36), das zwei einander gegenüberliegenden Seiten des Werkstücks zugeordnete Werkzeugteile (9, 13; 37) umfasst, die jeweils zwei in Schlitzrichtung (21) verlaufende Längsschneiden (22, 25) und an den Längsenden der Längsschneiden (22, 25) zwischen diesen quer zu der Schlitzrichtung (21) verlaufende Querschneiden (23, 24; 26, 27) aufweisen, wobei die Längsschneiden (22) an dem einen Werkzeugteil (9) in Schlitzrichtung (21) gegenüber dem Werkstück ansteigen und wobei im Laufe des Verfahrens die Werkzeugteile (9, 13; 37) relativ zueinander in Werkstückquerrichtung und das Schlitzwerkzeug (16, 36) und das Werkstück relativ zueinander in Vorschubrichtung (32) bewegt werden und die Werkzeugteile (9, 13) bei ihrer Relativbewegung Hübe in Form von Schlitzhüben und wenigstens einem Kapphub ausführen, wobei bei den Schlitzhüben mittels der Werkzeugteile (9, 13; 37) ein Materialstreifen (31) mit in Schlitzrichtung (21) gelegener Verbindung mit dem restlichen Werkstück freigeschnitten und diese Verbindung bei dem Kapphub mittels derselben Werkzeugteile (9, 13; 37) gekappt wird und wobei bei einem Anschnitt-Schlitzhub ein Anschnitt mit Abstand von dem Werkstückrand hergestellt und vor dem Kapphub nach dem Anschnitt-Schlitzhub wenigstens ein nachfolgender Schlitzhub ausgeführt und das Werkstück bei dem Anschnitt-Schlitzhub und dem wenigstens einen nachfolgenden Schlitzhub über eine Schlitzlänge geschlitzt wird, welche die bei dem Kapphub maximal erzielbare Schlitzlänge (1) übersteigt und wobei das Werkstück und das Schlitzwerkzeug (16, 36) zwischen den Hüben der Werkzeugteile (9, 13; 37) mit wenigstens einer Vorschubbewegung relativ zueinander in Vorschubrichtung (32) bewegt werden, **dadurch gekennzeichnet, dass** das Schlitzwerkzeug (16, 36) und das Werkstück nach dem Anschnitt-Schlitzhub und dem wenigstens einen nachfolgenden Schlitzhub mit einer Rückschubbewegung entgegen der Vorschubrichtung (32) relativ zueinander über eine Rückschublänge (A) bewegt werden, die maximal der Schlitzlänge zwischen den in Schlitzrichtung (21) hinten liegenden Querschneiden (24, 27) der Werkzeugteile (9, 13) und der in Schlitzrichtung (21) hinten liegenden Querbegrenzung des zuvor freigeschnittenen Abschnittes des Schlitzes (30) entspricht und dass anschließend und vor dem den Schlitz (30) fertig stellenden Endhub ein Kapphub ausgeführt wird.

2.  Verfahren nach Anspruch 1, **dadurch gekennzeichnet, dass** das Werkstück und das Schlitzwerkzeug (16, 36) bei dem Anschnitt-Schlitzhub und dem wenigstens einen nachfolgenden Schlitzhub zwischen den Hüben der Werkzeugteile (9, 13; 37) wenigsten einmal relativ zueinander mit einer Vorschubbewegung in Vorschubrichtung (32) über eine Vorschublänge (B) bewegt werden, welche der Rückschublänge (A) der nachfolgenden Rückschubbewegung vor einem Kapphub entspricht.

3.  Verfahren nach einem der vorhergehenden Ansprüche, **dadurch gekennzeichnet, dass** die Rückschublänge (A) in Abhängigkeit von der Dicke (d) des zu schlitzenden Werkstücks und von dem Verlauf definiert wird, welchen die Längsschneiden (22) an dem einen Werkzeugteil (9) gegenüber dem Werkstück aufweisen.

4.  Verfahren nach einem der vorhergehenden Ansprüche, **dadurch gekennzeichnet, dass** die Rückschublänge A nach der Formel

$$A \geq \frac{\frac{1}{4}\, d}{\tan \alpha}$$

ermittelt wird, wobei

A     die Rückschublänge,
d     die Blechdicke und
$\alpha$     ein Neigungswinkel der Längsschneiden (22) an dem einen Werkzeugteil (9) ist, unter welchem diese Längsschneiden (22) in Schlitzrichtung (21) gegenüber dem Werkstück ansteigen.

5.  Verfahren nach einem der vorhergehenden Ansprüche, **dadurch gekennzeichnet, dass** die Rückschublänge A nach der Formel

$$A = \frac{2/3\, d}{\tan \alpha}$$

ermittelt wird, wobei

A     die Rückschublänge,
d     die Blechdicke und
$\alpha$     ein Neigungswinkel der Längsschneiden (22) an dem einen Werkzeugteil (9) ist, unter welchem diese Längsschneiden (22) in Schlitzrichtung (21) gegenüber dem Werkstück ansteigen.

6.  Maschine zum mehrhubig fortschreitenden Schlitzen von plattenartigen Werkstücken, insbesondere von Blechen (2), mit einem Schlitzwerkzeug (16, 36) und einer Vorschubeinrichtung (19), mittels derer das Schlitzwerkzeug (16, 36) und das Werkstück in Vorschubrichtung (32) relativ zueinander bewegbar sind und die von einer Vorschubsteuerung gesteuert ist, wobei das Schlitzwerkzeug (16, 36) zwei einander gegenüberliegenden Seiten des Werkstücks zugeordnete Werkzeugteile (9, 13; 37) aufweist, die jeweils mit zwei in Schlitzrichtung (21) verlaufenden Längsschneiden (22, 25) und an den Längsenden der Längsschneiden (22, 25) mit zwischen diesen quer zu der Schlitzrichtung (21) verlaufenden Querschneiden (23, 24; 26, 27) versehen sind, wobei die Längsschneiden (22) an dem einen Werkzeugteil (9) in Schlitzrichtung (21) gegenüber dem Werkstück ansteigen und wobei die Werkzeugteile (9, 13; 37) mittels eines von einer Hubsteuerung gesteuerten Hubantriebes (8) relativ zueinander in Werkstückquerrichtung mit Hüben in Form von Schlitzhüben und wenigstens einem Kapphub bewegbar sind und bei den Schlitzhüben mittels der Werkzeugteile (9, 13; 37) ein Materialstreifen (31) mit in Schlitzrichtung (21) gelegener Verbindung mit dem restlichen Werkstück freigeschnitten und diese Verbindung bei einem Kapphub mittels derselben Werkzeugteile (9, 13; 37) gekappt wird und wobei mittels der Werkzeugteile (9, 13; 37) bei einem Anschnitt-Schlitzhub ein Anschnitt mit Abstand von dem Werkstückrand herstellbar und vor dem Kapphub nach dem Anschnitt-Schlitzhub wenigstens ein nachfolgender Schlitzhub ausführbar und das Werkstück bei dem Anschnitt-Schlitzhub und dem wenigstens einen nachfolgenden Schlitzhub über eine Schlitzlänge schlitzbar ist, welche die bei dem Kapphub maximal erzielbare Schlitzlänge (1) übersteigt und wobei das Werkstück und das Schlitzwerkzeug (16, 36) zwischen den Hüben der Werkzeugteile (9, 13, 37) mittels der Vorschubeinrichtung (19) relativ zueinander in Vorschubrichtung (32) bewegbar sind, **dadurch gekennzeichnet, dass** das Schlitzwerkzeug (16, 36) und das Werkstück nach dem Anschnitt-Schlitzhub und dem wenigstens einen nachfolgenden Schlitzhub mittels einer Rückschubeinrichtung, die von einer Rückschubsteuerung gesteuert ist, mit einer Rückschubbewegung entgegen der Vorschubrichtung (32) relativ zueinander über eine Rückschublänge (A) bewegbar sind, die maximal der Schlitzlänge zwischen den in Schlitzrichtung (21) hinten liegenden Querschneiden (24, 27) der Werkzeugteile (9, 13; 37) und der in Schlitzrichtung (21) hinten liegenden Querbegrenzung des zuvor freigeschnittenen Abschnittes des Schlitzes (30) entspricht und dass anschließend und vor dem den Schlitz fertig stellenden Endhub die Werkzeugteile (9, 13; 37) mittels des Hubantriebes (8) unter Ausführung eines Kapphubes relativ zueinander in Werkstückquerrichtung bewegbar sind.

7.  Maschine nach Anspruch 6, **dadurch gekennzeichnet, dass** das Werkstück und das Schlitzwerkzeug (16, 36) bei dem Anschnitt-Schlitzhub und dem wenigstens einen nachfolgenden Schlitzhub zwischen den Hüben der Werkzeugteile (9, 13; 37) mittels der Vorschubeinrichtung (19) wenigstens einmal relativ zueinander mit einer Vorschubbewegung in Vorschubrichtung (32) über eine Vorschublänge (B) bewegbar sind, welche der Rückschublänge (A) der nachfolgenden Rückschubbewegung vor dem Kapphub entspricht.

8.  Maschine nach Anspruch 6 oder 7, **dadurch gekennzeichnet, dass** die Rückschubeinrichtung von der Rückschubsteuerung und/oder die Vorschubeinrichtung (19) von der Vorschubsteuerung in Abhängigkeit von der Dicke (d) des zu schlitzenden Werkstücks und von dem Verlauf steuerbar sind, welchen die Längsschneiden (22) an dem einen Werkzeugteil (9) gegenüber dem Werkstück aufweisen.

9.  Maschine nach einem der Ansprüche 6 bis 8, **dadurch gekennzeichnet, dass** die Rückschubeinrichtung von der Rückschubsteuerung derart steuerbar ist, dass

$$A \geq \frac{\frac{1}{4}\, d}{\tan \alpha,}$$

wobei

A   die Rückschublänge,
d   die Blechdicke und
$\alpha$   ein Neigungswinkel der Längsschneiden (22) an dem einen Werkzeugteil (9) ist, unter welchem diese Längsschneiden (22) in Schlitzrichtung (21) gegenüber dem Werkstück ansteigen.

10. Maschine nach einem der Ansprüch 6 bis 9, **dadurch gekennzeichnet, dass** die Rückschubeinrichtung von der Rückschubsteuerung derart steuerbar ist, dass

$$A = \frac{2/3\, d}{\tan \alpha}$$

wobei

A   die Rückschublänge,
d   die.Blechdicke und
$\alpha$   ein Neigungswinkel der Längsschneiden (22) an dem einen Werkzeugteil (9) ist, unter welchem diese Längsschneiden (22) in.Schlitzrichtung (21) gegenüber dem Werkstück ansteigen.

11. Maschine nach einem der Ansprüche 6 bis 10, **dadurch gekennzeichnet, dass** als Rückschubeinrichtung die Vorschubeinrichtung (19) und als Rückschubsteuerung die Vorschubsteuerung vorgesehen ist.

12. Maschine nach einem der Ansprüche 6 bis 11, **dadurch gekennzeichnet, dass** der bei den Schlitzhüben freigeschnittene Materialstreifen (31) in einen der Werkzeugteile (9, 13) ragt und dass dieser Werkzeugteil (13) in einer in Vorschubrichtung (32) gelegenen Wand (28) einen Durchtritt (29) für den Materialstreifen (31) aufweist.

13. Maschine nach einem der Ansprüche 6 bis 12, wobei der den freigeschnittenen Materialstreifen (31) aufnehmende Werkzeugteil (13) an einer maschinenseitigen Werkzeugteilhalterung (14) gelagert ist, **dadurch gekennzeichnet, dass** der den Materialstreifen (31) aufnehmende Werkzeugteil (13) gegenüber der Werkzeugteilhalterung (14) derart angeordnet ist, dass der Durchtritt (29) für den Materialstreifen (31) an der Wand (28) des Werkzeugteils (13) von der Werkzeugteilhalterung (14) freigegeben ist.

## Claims

1. A process for the multistroke progressive slotting of plate-like workpieces, especially metal sheets (2), by means of a slotting tool (16, 36) comprising two tool parts (9, 13; 37) assigned to opposite sides of the workpiece, each of which tool parts (9, 13; 37) has two longitudinal cutting blades (22, 25) extending in the slotting direction (21) and, at the longitudinal ends of the longitudinal cutting blades (22, 25), transverse cutting blades (23, 24; 26, 27) extending between the latter and transversely to the slotting direction (21), wherein the longitudinal cutting blades (22) on the one tool part (9) are inclined upward with respect to the workpiece in the slotting direction (21) and wherein, in the course of the process, the tool parts (9, 13; 37) are moved relative to each other in a direction perpendicular to the workpiece, and the slotting tool (16, 36) and the workpiece are moved relative to each other in the forward feed direction (32) and, during their relative movement, the tool parts (9, 13) execute strokes in the form of slotting strokes and at least one severing stroke, wherein a strip of material (31) having a connection to the remainder of the workpiece, which connection is disposed in the slotting direction (21), is cut free by means of the tool parts (9, 13; 37) in the slotting strokes and that connection is severed by means of the same tool parts (9, 13; 37) in the severing stroke, and wherein an initial cut which is at a distance from the edge of the workpiece is made in an initial-cut slotting stroke and, after the initial-cut slotting stroke, at least one subsequent slotting stroke is executed before the severing stroke and, during the initial-cut slotting stroke and the at least one subsequent slotting stroke, the workpiece is slotted over a slot length that exceeds the maximum slot length (1) obtainable in the severing stroke, and wherein, between the strokes of the tool parts (9, 13; 37), the workpiece and the slotting tool (16, 36) are moved relative to each other in the forward feed direction (32) by at least one forward feed movement, **characterised in that**, after the initial-cut slotting stroke and the at least one subsequent slotting stroke, the slotting tool (16, 36) and the workpiece are moved relative to each other by a reverse feed movement counter to the forward feed direction (32) over a reverse feed length (A) that corresponds to not more than the slot length between the rearward transverse cutting blades (24, 27) of the tool parts (9, 13) in the slotting direction (21) and the rearward transverse boundary of the previously cut portion of the slot (30) in the slotting direction (21) and, subsequently and before the final stroke which completes the slot (30), a severing stroke is executed.

2. A process according to claim 1, **characterised in that**, during the initial-cut slotting stroke and the at least one subsequent slotting stroke, the workpiece and the slotting tool (16, 36) are moved relative to each other between the strokes of the tool parts (9, 13; 37) at least once by a forward feed movement in the forward feed direction (32) over a forward feed length (B) that corresponds to the reverse feed length (A) of the subsequent reverse feed movement before a severing stroke.

3. A process according to either of the preceding claims, **characterised in that** the reverse feed length (A) is defined in dependence upon the thickness (d) of the workpiece to be slotted and by the gradient of the longitudinal cutting blades (22) on the one tool part (9) with respect to the workpiece.

4. A process according to any one of the preceding claims, **characterised in that** the reverse feed length A is found by the formula

$$A \geq \frac{\frac{1}{4}d}{\tan\alpha}$$

wherein

A    is the reverse feed length,
d    is the thickness of the metal sheet and
α    is the angle of inclination of the longitudinal cutting blades (22) on the one tool part (9) by which those longitudinal cutting blades (22) are inclined upward with respect to the workpiece in the slotting direction (21).

5. A process according to any one of the preceding claims, **characterised in that** the reverse feed length A is found by the formula

$$A = \frac{^2/_3 d}{\tan\alpha}$$

wherein

A is the reverse feed length,
d is the thickness of the metal sheet and
$\alpha$ is the angle of inclination of the longitudinal cutting blades (22) on the one tool part (9) by which those longitudinal cutting blades (22) are inclined upward with respect to the workpiece in the slotting direction (21).

6. A machine for the multi-stroke progressive slotting of plate-like workpieces, especially metal sheets (2), comprising a slotting tool (16, 36) and a forward feed device (19) by means of which the slotting tool (16, 36) and the workpiece can be moved relative to each other in the forward feed direction (32) and which is controlled by a forward feed control, wherein the slotting tool (16, 36) comprises two tool parts (9, 13; 37) assigned to opposite sides of the workpiece, each of which tool parts (9, 13; 37) is provided with two longitudinal cutting blades (22, 25) extending in the slotting direction (21) and, at the longitudinal ends of the longitudinal cutting blades (22, 25), with transverse cutting blades (23, 24; 26, 27) extending between the latter and transversely to the slotting direction (21), wherein the longitudinal cutting blades (22) on the one tool part (9) are inclined upward with respect to the workpiece in the slotting direction (21) and wherein, by means of a stroke drive (8) which is controlled by a stroke control, the tool parts (9, 13; 37) are movable relative to each other in a direction perpendicular to the workpiece with strokes in the form of slotting strokes and at least one severing stroke, and a strip of material (31) having a connection to the remainder of the workpiece, which connection is disposed in the slotting direction (21), is cut free by means of the tool parts (9, 13; 37) in the slotting strokes and that connection is severed by means of the same tool parts (9, 13; 37) in a severing stroke, and wherein an initial cut which is at a distance from the edge of the workpiece can be made by means of the tool parts (9, 13; 37) in an initial-cut slotting stroke and, after the initial-cut slotting stroke, at least one subsequent slotting stroke can be executed before the severing stroke, and the workpiece can be slotted during the initial-cut slotting stroke and the at least one subsequent slotting stroke over a slot length that exceeds the maximum slot length (1) obtainable in the severing stroke, and wherein, between the strokes of the tool parts (9, 13; 37), the workpiece and the slotting tool (16, 36) are movable relative to each other in the forward feed direction (32) by means of the forward feed device (19), **characterised in that**, after the initial-cut slotting stroke and the at least one subsequent slotting stroke, by means of a reverse feed device which is controlled by a reverse feed control the slotting tool (16, 36) and the workpiece are movable relative to each other by a reverse feed movement counter to the forward feed movement (32) over a reverse feed length (A) that corresponds to not more than the slot length between the rearward transverse cutting blades (24, 27) of the tool parts (9, 13; 37) in the slotting direction (21) and the rearward transverse boundary of the previously cut portion of the slot (30) in the slotting direction (21) and, subsequently and before the final stroke which completes the slot, by means of the stroke drive (8) the tool parts (9, 13; 37) are movable relative to each other in a direction perpendicular to the workpiece to execute a severing stroke.

7. A machine according to claim 6, **characterised in that** during the initial-cut slotting stroke and the at least one subsequent slotting stroke, by means of the forward feed device (19) the workpiece and the slotting tool (16, 36) are movable relative to each other between the strokes of the tool parts (9, 13; 37) at least once by a forward feed movement in the forward feed direction (32) over a forward feed length (B) that corresponds to the reverse feed length (A) of the subsequent reverse feed movement before the severing stroke.

8. A machine according to claim 6 or 7, **characterised in that** the reverse feed device is controllable by the reverse feed control and/or the forward feed device (19) is controllable by the forward feed control in dependence upon the thickness (d) of the workpiece to be slotted and on the gradient of the longitudinal cutting blades (22) on the one tool part (9) with respect to the workpiece.

9. A machine according to any one of the claims 6 to 8, characterised is that the reverse feed device is controllable by the reverse feed control in such a manner that

$$A \geq \frac{^1/_4 d}{\tan\alpha}$$

wherein

A     is the reverse feed length,

d     is the thickness of the metal sheet and

α     is the angle of inclination of the longitudinal cutting blades (22) on the one tool part (9) by which those longitudinal cutting blades (22) are inclined upward with respect to the workpiece in the slotting direction (21).

10. A machine according to any one of claims 6 to 9, **characterised in that** the reverse feed device is controllable by the reverse feed control in such a manner that

$$A=\frac{^2/_3 d}{\tan\alpha}$$

wherein

A     is the reverse feed length,

d     is the thickness of the metal sheet and

α     is the angle of inclination of the longitudinal cutting blades (22) on the one tool part (9) by which those longitudinal cutting blades (22) are inclined upward with respect to the workpiece in the slotting direction (21).

11. A machine according to any one of claims 6 to 10, **characterised in that** the forward feed device (19) is provided as the reverse feed device and the forward feed control is provided as the reverse feed control.

12. A machine according to any one of claims 6 to 11, **characterised in that** the strip of material (31) which is cut free during the slotting strokes projects into one of the tool parts (9, 13) and that tool part (13) has a passage (29) for the strip of material (31) in a wall (28) disposed in the forward feed direction (32).

13. A machine according to any one of claims 6 to 12, wherein the tool part (13) that receives the strip of material (31) which has been cut free is mounted on a machine-side tool part holder (14), **characterised in that** the tool part (13) that receives the strip of material (31) is arranged in relation to the tool part holder (14) in such a manner that the passage (29) for the strip of material (31) at the wall (28) of the tool part (13) is left free by the tool part holder (14).

## Revendications

1.  Procédé destiné à rainurer progressivement en plusieurs courses des pièces en forme de plaque, en particulier des tôles (2), au moyen d'un outil de rainurage (16, 36), qui comprend des parties d'outil (9, 13 ; 37), qui sont associées à deux côtés opposés de la pièce à usiner et qui sont munies chacune de deux taillants longitudinaux (22, 25) s'étendant dans le sens de la rainure (21) et, au niveau des extrémités longitudinales des taillants longitudinaux (22, 25), de taillants transversaux (23, 24 ; 26, 27) s'étendant entre ces derniers transversalement au sens de la rainure (21), les taillants longitudinaux (22) au niveau de l'une des parties d'outil (9) étant inclinés en pente ascendante dans le sens de la rainure (21) par rapport à la pièce à usiner et dans lequel, au cours du procédé, les parties d'outil (9, 13 ; 37) étant déplacées les unes par rapport aux autres dans le sens transversal de la pièce à usiner et l'outil de rainurage (16, 36) et la pièce à usiner étant déplacés l'un par rapport à l'autre dans le sens d'avance (32) et les parties d'outil (9, 13) effectuant au cours de leur déplacement relatif des courses sous forme de courses de rainurage et d'au moins une course de sectionnement, sachant que pendant les courses de rainurage avec les parties d'outil (9, 13 ; 37), une bande de matériau (31) est débourrée en restant liée au reste de la pièce à usiner dans le sens de la rainure (21) et cette partie liée est sectionnée pendant la course de sectionnement avec les mêmes parties d'outil (9, 13 ; 37), et une attaque de coupe étant réalisée à distance du bord de la pièce à usiner pendant une course de rainurage d'attaque et au moins une course de rainurage consécutive est effectuée après la course de rainurage d'attaque avant la course de sectionnement, et, pendant la course de rainurage d'attaque et la au moins une course de rainurage consécutive, la pièce à usiner étant rainurée sur une longueur de rainure, qui est supérieure à la longueur de rainure (1) maximale à atteindre pendant la course de sectionnement et sachant que, entre les courses des parties d'outil (9, 13 ; 37), la pièce à usiner et l'outil de rainurage (16, 36) sont déplacés l'un par rapport à l'autre dans le sens d'avance (32) par au moins un mouvement d'avance, **caractérisé en ce que**, après la course de rainurage d'attaque et la au moins une course de rainurage consécutive, l'outil de rainurage (16, 36) et la pièce à usiner sont déplacés l'un par rapport à l'autre par un mouvement de recul opposé au sens d'avance (32) sur une longueur de recul (A), qui correspond au maximum à la longueur de rainure comprise entre les taillants transversaux (24, 27) des parties d'outil (9, 13), disposés à l'arrière par référence au sens de la rainure (21), et la paroi transversale de la partie de rainure (30) préalablement débourrée, située à l'arrière par référence au sens de la rainure (21) et **en ce qu'**une course de sectionnement est effectuée ensuite et avant la course finale achevant la rainure (30).

2. Procédé selon la revendication 1, **caractérisé en ce que**, pendant la course de rainurage d'attaque et la au moins une course de rainurage consécutive, entre les courses des parties d'outil (9, 13 ; 37), la pièce à usiner et l'outil de rainurage (16, 36) sont déplacés au moins une fois l'une par rapport à l'autre par un mouvement d'avance dans le sens d'avance (32) sur une longueur d'avance (B), qui correspond à la longueur de recul (A) du mouvement de recul consécutif, effectué avant une course de sectionnement.

3. Procédé selon l'une quelconque des revendications précédentes, **caractérisé en ce que** la longueur de recul (A) est définie en fonction de l'épaisseur (d) de la pièce à rainurer et de l'allure des taillants longitudinaux (22) au niveau de l'une des parties d'outil (9) par rapport à la pièce à usiner.

4. Procédé selon l'une quelconque des revendications précédentes, **caractérisé en ce que** la longueur de recul A est calculée selon la formule suivante :

$$A \geq \frac{\frac{1}{4}d}{\tan\alpha}$$

dans laquelle

A est la longueur de recul,
d est l'épaisseur de la tôle et
$\alpha$ est un angle d'inclinaison des taillants longitudinaux (22) au niveau de l'une des parties d'outil (9) selon lequel ces taillants longitudinaux (22) sont inclinés en pente ascendante dans le sens de la rainure (21) par rapport à la pièce à usiner.

5. Procédé selon l'une quelconque des revendications précédentes, **caractérisé en ce que** la longueur de recul A est calculée selon la formule suivante :

$$A = \frac{2/3\,d}{\tan\alpha}$$

dans laquelle

A est la longueur de recul,
d est l'épaisseur de la tôle et
$\alpha$ est un angle d'inclinaison des taillants longitudinaux (22) au niveau de l'une des parties d'outil (9) selon lequel ces taillants longitudinaux (22) sont inclinés en pente ascendante dans le sens de la rainure (21) par rapport à la pièce à usiner

6. Machine à rainurer à plusieurs courses de pièces en forme de plaques, en particulier de tôles (2), comprenant un outil de rainurage (16, 36) et un dispositif d'avance (19), au moyen duquel l'outil de rainurage (16, 36) et la pièce à usiner peuvent être déplacés l'un par rapport à l'autre dans le sens d'avance (32) et qui est commandé par un dispositif de commande d'avance, l'outil de rainurage (16, 36) étant formé par des parties d'outil (9, 13 ; 37), qui sont associées à deux côtés opposés de la pièce à usiner et qui sont munies chacune de deux taillants longitudinaux (22, 25) s'étendant dans le sens de la rainure (21) et, au niveau des extrémités longitudinales des taillants longitudinaux (22, 25), de taillants transversaux (23, 24 ; 26, 27) s'étendant entre ces derniers transversalement au sens de la rainure (21), les taillants longitudinaux (22) étant inclinés en pente ascendante au niveau de l'une des parties d'outil (9) dans le sens de la rainure (21) par rapport à la pièce à usiner et les parties d'outil (9, 13 ; 17) pouvant être déplacées les unes par rapport aux autres dans le sens transversal de la pièce à usiner au moyen d'une commande de course (8) actionnée par un dispositif de commande de course, en effectuant des courses sous la forme de courses de rainurage et d'au moins une course de sectionnement et, pendant les courses de rainurage avec les parties d'outil (9, 13 ; 37), une bande de matériau (31) est débourrée en restant liée au reste de la pièce à usiner dans le sens de la rainure (21) et cette partie liée est sectionnée pendant une course de sectionnement avec les mêmes parties d'outil (9, 13 ; 37), et une attaque de coupe étant réalisée à distance du bord de la pièce à usiner pendant une course de rainurage d'attaque et au moins une course de rainurage consécutive est effectuée après la course de rainurage d'attaque avant la course de sectionnement et, pendant la course de rainurage d'attaque et la au moins une course de rainurage consécutive, la pièce à usiner peut être rainurée sur une longueur de rainure qui est supérieure à la longueur de rainure (1) maximale à atteindre pendant la course de sectionnement et, entre les courses des parties d'outil (9, 13 ; 37), la pièce à usiner et l'outil de rainurage (16, 36) pouvant être déplacés l'un par rapport à l'autre dans le sens d'avance (32) au moyen du dispositif d'avance (19), **caractérisée en ce que**, après la course de rainurage d'attaque et la au moins une course de rainurage consécutive, l'outil de rainurage (16, 36) et la pièce à usiner peuvent être déplacés l'un par rapport à l'autre par un mouvement de recul opposé au sens d'avance (32), au moyen d'un dispositif de recul qui est actionné par un dispositif de commande de recul, sur une longueur de recul (A), qui correspond au maximum à la longueur de rainure comprise entre les taillants transversaux (24, 27) des parties d'outil (9, 13 ; 37), disposés à l'arrière par référence au sens de la rainure (21), et la paroi transversale de la partie de rainure (30) préalablement débourrée, située à l'arrière par référence au sens de la rainure (21), et **en ce que** les parties d'outil (9, 13 ; 37) peuvent être déplacées l'une par rapport à l'autre ensuite et avant la course finale achevant la rainure au moyen de la commande de course (8) en effectuant une course de sectionnement dans le sens transversal de la pièce à usiner.

7. Machine selon la revendication 6, **caractérisée en ce que**, pendant la course de rainurage d'attaque et la au moins une course de rainurage consécutive, entre les courses des parties d'outil (9, 13 ; 37), la pièce à usiner et l'outil de rainurage (16, 36) peuvent être déplacés au moins une fois l'un par rapport à l'autre, avec un mouvement d'avance dans le sens d'avance (32) au moyen du dispositif d'avance (19), sur une longueur d'avance (B), qui correspond à la longueur de recul (A) du mouvement de recul consécutif, effectué avant la course de sectionnement.

8. Machine selon la revendication 6 ou 7, **caractérisée en ce que** peuvent être actionnés le dispositif de recul par le dispositif de commande de recul et/ou le dispositif d'avance (19) par le dispositif de commande d'avance en fonction de l'épaisseur (d) de la pièce à rainurer et de l'allure des taillants longitudinaux (22) au niveau de l'une des parties d'outil (9) par rapport à la pièce à usiner.

9. Machine selon l'une quelconque des revendications 6 à 8, **caractérisée en ce que** le dispositif de recul peut être commandé par le dispositif de commande de recul de façon à satisfaire à l'équation suivante :

$$A \geq \frac{\frac{1}{4}d}{\tan\alpha}$$

dans laquelle

A est la longueur de recul,
d est l'épaisseur de la tôle et
$\alpha$ est un angle d'inclinaison des taillants longitudinaux (22) au niveau de l'une des parties d'outil (9) selon lequel ces taillants longitudinaux (22) sont inclinés en pente ascendante dans le sens de la rainure (21) par rapport à la pièce à usiner.

10. Machine selon l'une quelconque des revendications 6 à 9, **caractérisée en ce que** le dispositif de recul peut être commandé par le dispositif de commande de recul de façon à satisfaire à l'équation suivante :

$$A = \frac{2/3\,d}{\tan\alpha}$$

dans laquelle

A est la longueur de recul,
d est l'épaisseur de la tôle et
$\alpha$ est un angle d'inclinaison des taillants longitudinaux (22) au niveau de l'une des parties d'outil (9) selon lequel ces taillants longitudinaux (22) sont inclinés en pente ascendante dans le sens de la rainure (21) par rapport à la pièce à usiner.

11. Machine selon l'une quelconque des revendications 6 à 10, **caractérisée en ce que** le dispositif d'avance (19) est prévu en tant que dispositif de recul et **en ce que** le dispositif de commande d'avance est prévu en tant que dispositif de commande de recul.

**12.** Machine selon l'une quelconque des revendications 6 à 11, **caractérisée en ce que** la bande de matériau (31) débourrée pendant les courses de rainurage s'engage dans l'une des parties d'outil (9, 13) et **en ce que** cette partie d'outil (13) comporte un passage (29) destiné à la bande de matériau (31), réalisé dans une paroi (28) située dans le sens d'avance (32).

**13.** Machine selon l'une quelconque des revendications 6 à 12, dans laquelle la partie d'outil (13) recevant la bande de matériau (31) débourrée est disposée sur un support de partie d'outil (14) côté machine, **caractérisée en ce que** la partie d'outil (13) recevant la bande de matériau (31) est disposée par rapport au support de partie d'outil (14) de telle sorte que le passage (29), destiné à la bande de matériau (31) et réalisé dans la paroi (28) de la partie d'outil (13), soit libéré du support de partie d'outil (14).

Fig. 1

EP 1 317 974 B1

Fig. 2

Fig. 3

Fig. 4

EP 1 317 974 B1

Fig. 5/1

Fig. 5/2

Fig. 5/3

Fig. 5/4

Fig. 5/5

Fig. 5/6

19

Fig. 6/1

Fig. 6/2

Fig. 6/3

Fig. 6/4

Fig. 6/5

**Fig. 7/1**

**Fig. 7/2**

**Fig. 7/3**

Fig. 8

Fig. 9